# EUROPEAN PATENT SPECIFICATION

(11) **EP 2 219 024 B1**
(45) Date of publication and mention of the grant of the patent: **18.04.2018**
(21) Application number: 08854246.9
(22) Date of filing: 28.11.2008
(51) Int. Cl.: G01N 27/404, G01N 27/30, G01N 27/416

(54) **ELECTROCHEMICAL OXYGEN SENSOR**
ELEKTROCHEMISCHER SAUERSTOFFSENSOR
DÉTECTEUR D'OXYGÈNE ÉLECTROCHIMIQUE

(30) Priority: 28.11.2007 JP 2007306940
(43) Date of publication of application: 18.08.2010
(73) Proprietor: GS Yuasa International Ltd., Kisshoin, Minami-ku, Kyoto-shi, Kyoto 601-8520 (JP)
(72) Inventor: KITAZAWA, Naohisa, Kyoto-shi, Kyoto 601-8520 (JP)
(74) Representative: Müller-Boré & Partner Patentanwälte PartG mbB
(86) International application number: PCT/JP2008/071653
(87) International publication number: WO 2009/069749

(56) References cited:
- JP-A- 2004 132 915
- JP-A- 2006 017 627
- JP-A- 2007 205 910
- US-A- 5 030 336
- US-A1- 2004 222 107

## Description

### TECHNICAL FIELD

The present invention relates to an electrochemical oxygen sensor.

### BACKGROUND ART

Electrochemical oxygen sensors have the advantages that they are inexpensive and convenient, and can operate at ordinary temperature, and have been thus used in a wide range of fields such as for checking the degree of oxygen deficiency in holds and in manholes, or for detecting oxygen concentrations in medical devices such as anesthesia machines and ventilators.

The principle of an electrochemical oxygen sensor will be briefly described. The electrochemical oxygen sensor includes, as major components, a cathode containing a highly active metal (for example, gold or platinum) which can reduce oxygen, an anode, and an electrolyte solution. In such an electrochemical oxygen sensor, a capillary (capillary pore) or an oxygen permeable membrane is disposed in addition to the components, which limits the penetration of oxygen so that oxygen does not reach the cathode too much. In each case of these capillary type and oxygen permeable membrane type, oxygen brought into contact with the surface of the cathode is electrochemically reduced.

Among electrochemical oxygen sensors, an electrochemical oxygen sensor with a resistor connected between an anode and a cathode is referred to as a galvanic cell type oxygen sensor. In the galvanic cell type oxygen sensor, the current generated by electrochemical reduction of oxygen on the cathode is converted to a voltage at the resistor. Since the current converted to a voltage is proportional to the oxygen gas concentration, the oxygen gas concentration of unknown gas can be detected by measuring the voltage.

Electrochemical oxygen sensors other than galvanic cell type oxygen sensors include, for example, potentiostatic type oxygen sensors. The potentiostatic type oxygen sensor refers to a sensor in which a constant voltage is applied between an anode and a cathode, and the applied voltage is set depending on the electrochemical characteristics of the respective electrodes and the type of detected gas. In the potentiostatic type oxygen sensor, when an appropriate constant voltage is applied between the anode and the cathode, the current flowing therebetween is proportional to the oxygen gas concentration. Thus, when the current is converted to a voltage, the oxygen gas concentration of unknown gas can be detected by measuring the voltage, in the same way as in the galvanic cell type oxygen sensor.

As such electrochemical oxygen sensors, for example, electrochemical oxygen sensors described in Patent Document 1 are known. Patent Document 1 discloses an electrochemical oxygen sensor including a cathode containing gold (Au), an anode containing zinc (Zn), and an electrolyte solution with pH of 7 to 12, and an electrochemical oxygen sensor including a cathode containing Au, an anode containing aluminum (Al), and an electrolyte solution with pH of 3 to 9.
Patent Document 1: Japanese Patent Application Laid-Open No. 2005-233835 Document US 2007/0222107 describes an electrochemical oxygen sensor wherein the electrolyte preferably has a pH value of at least 9.

### DISCLOSURE OF THE INVENTION

### (Problem to be Solved by the Invention)

According to what is disclosed in Patent Document 1, the use of an electrode containing Zn or Al for the anode can provide an inexpensive electrochemical oxygen sensor with low environmental loads.

However, when no lead is used for the anode as in the electrochemical oxygen sensors described in Patent Document 1, there is a problem that the response speed is low, as compared with electrochemical oxygen sensors in which lead is used for their anodes.

The "response speed" herein refers to a time period required until the output corresponding a differing concentration of oxygen gas is provided when the differing concentration of oxygen gas is passed through an electrochemical oxygen sensor which has its output stabilized by passing a certain concentration of oxygen gas therethrough, where the differing concentration is different from the oxygen gas concentration in the stabilized state.

It is to be noted that the response speeds of sensors are often evaluated as 90% response speeds. The "90% response speed" herein refers to a time period until output corresponding to 90% of saturation output is provided in the case of passing a certain concentration of oxygen gas through a sensor to stabilize the sensor, then passing therethrough a differing concentration of oxygen gas which has a different concentration from the oxygen gas concentration in the stabilized state, and setting as 100% the output (referred to as saturation output) which can be produced by passing therethrough the differing concentration of oxygen gas.

The present invention has been completed in view of the circumstances as described above, and an object of the present invention is to provide an electrochemical oxygen sensor which provides a high response speed.

### (Means for Solving the Problem)

As a result of earnest considerations for solving the problem, the inventors have newly found that the use of an electrolyte solution containing a chelating agent as an electrolyte of an electrochemical oxygen sensor increases the response speed.

Specifically, the present invention provides an electrochemical oxygen sensor including a cathode, an anode, and an electrolyte solution, wherein the electrolyte solution contains a chelating agent, as defined in claim 1.

While the reason that the use of the electrolyte solution containing the chelating agent increases the response speed is unspecified, the reason is presumed as follows.

As a cause of lowering the response speed of a conventional oxygen sensor, the adhesion of a reaction inhibition production to the anode surface is considered, such as the creation of a passive state at the anode surface. It is believed that the chelating agent present in the electrolyte solution diffuses or partially dissolves the reaction inhibition production in the electrolyte solution, or catches an intermediate (for example, a metal ion which is used as an anode material) originating the reaction inhibition production to prevent the generation of the reaction inhibition production itself, thereby increasing the response speed of the oxygen sensor.

According to the present invention, the use of the electrolyte solution containing the chelating agent can provide an electrochemical oxygen sensor which provides a high response speed.

The present invention has the following configuration.

A material of the anode is tin.

The anode composed of tin (Sn) is preferable in that no hydrogen generation due to local corrosion is caused in the electrolyte solution containing the chelating agent for use in the present invention, resulting in low environmental loads.

In the present invention, the chelating agent in the electrolyte solution preferably has a concentration of not less than 0.005 mol/liter.

In the present invention, as long as the electrolyte solution is used which contains the chelating agent even in minute amounts, the response speed is increased more than in the case of using an electrolyte solution containing no chelating agent at all. However, when the concentration of the chelating agent in the electrolyte solution is too low, decrease in the response speed (also referred to as "lowering of response speed characteristics") may be caused in a few days. Thus, in the present invention, the concentration of the chelating agent in the electrolyte solution is preferably not less than 0.005 mol/liter, because response speed characteristics are less likely to lower.

In the present invention, the electrolyte solution has a pH in the range of 12 to 14. In the present invention, it is preferable that the electrolyte solution have pH not less than 12, because the pH not less than 12 prominently produces the advantageous effect that the increased response speed can be maintained for a long period of time.

The electrochemical oxygen sensor according to the present invention preferably includes an oxygen permeable membrane composed of a polytetrafluoroethylene or a tetrafluoroetylene-hexafluoropropylene copolymer.

As described above, an oxygen permeable membrane or a capillary is disposed in the electrochemical oxygen sensor in order to adjust the amount of oxygen reaching the cathode. Preferably, an oxygen permeable membrane type which has a longer life than a capillary type can permit oxygen permeable selectively, limit the amount of permeated oxygen gas, and produce limiting current over a wide range of voltages. From this point of view, in the case of using an oxygen permeable membrane, it is preferable to use an oxygen permeable membrane composed of polytetrafluoroethylene or a tetrafluoroetylene-hexafluoropropylene copolymer.

It is preferable that the electrochemical sensor according to the present invention be a galvanic cell type sensor in which a thermistor or a resistor is connected between a cathode and an anode to convert a current to a voltage signal, thereby obtaining a sensor output voltage, because of no external output supply required, ease in handling, and inexpensiveness.

### (Advantageous Effect of the Invention)

According to the present invention, an electrochemical oxygen sensor can be provided which provides a high response speed.

### BRIEF DESCRIPTION OF THE DRAWINGS

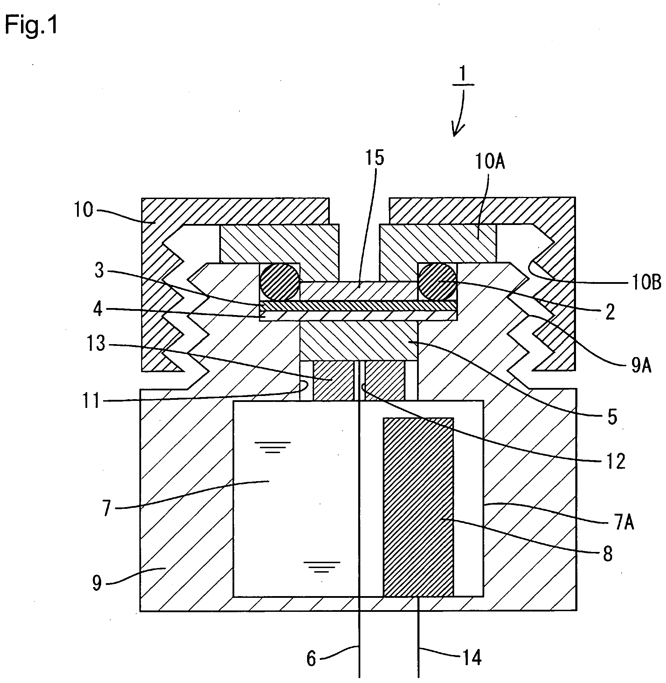

FIG. 1 is a diagram illustrating a cross section stricture of an electrochemical oxygen sensor according to the embodiment.

### DESCRIPTION OF REFERENCE SYMBOLS

1 ··· Electrochemical oxygen sensor
2 ··· O-ring
3 ··· Oxygen permeable membrane
4 ··· Cathode
5 ··· Cathode current collector
6 ··· Cathode lead wire
7 ··· Electrolyte solution
8 ··· Anode
9 ··· Holder body
10 ··· Holder lid
10A ··· Inner lid
11 ··· Perforation for supplying an electrolyte solution
12 ··· Perforation for a cathode lead
13 ··· Cathode current collector holding section
14 ··· Anode lead wire
15 ··· Protective film

### BEST MODE FOR CARRYING OUT THE INVENTION

### <First Embodiment>

An electrochemical oxygen sensor 1 (hereinafter, also referred to as a "sensor") according to a first embodiment of the present invention will be described below with reference to FIG. 1.

The sensor 1 according to the present embodiment has a cylindrical shape. FIG. 1 shows a cross-sectional view appearing in the case of cutting the sensor 1 according to the present embodiment along a plane passing through the central axis of the sensor 1.

The sensor 1 according to the present embodiment includes a holder body 9 made of an ABS resin and a holder lid 10 disposed over the holder body 9. The holder body 9 and the holder lid 10 respectively have thread sections 9A, 10B formed of thread ridges and thread grooves.

The sensor 1 according to the present embodiment has a structure hermetically sealed by screwing together the thread sections 9A of the holder body 9 and the thread section 10B of the holder lid 10, and has an inner lid 10A made of an ABS resin and an O-ring 2 mounted between the holder lid 10 and the holder body 9 so that the air-tight property and liquid-tight property can be maintained.

The holder body 9 holds therein an oxygen permeable membrane 3, a gold (Au) cathode 4 sputtered on the oxygen permeable membrane 3, which is made of gold (Au), and a cathode current collector 5 made of carbon, a cathode lead wire 6 made of titanium, an electrolyte solution 7, and an anode 8 made of titanium.

The oxygen permeable membrane 3, the cathode 4, and the cathode current collector 5 are pressed against each other by screwing the thread section 9A of the holder body 9 and the thread section 10B of the holder lid 10, and kept in a favorable contact state. An inner lid 10A is disposed over the oxygen permeable membrane 3 with a protective film 15 interposed therebetween, and functions as an end plate pressed against the oxygen permeable membrane 3, the cathode 4, and the cathode current collector 5.

The protective film 15 disposed on the oxygen permeable membrane 3 is formed of a porous fluorocarbon resin film, and prevents the surface of the oxygen permeable membrane 3 from being stained.

The oxygen permeable membrane 3 is disposed for limiting the penetration of oxygen so that oxygen does not reach the cathode 4 too much. Preferably, the oxygen permeable membrane 3 can permit oxygen permeable selectively, limit the amount of permeated oxygen, and produce limiting current over a wide range of voltages. From this point of view, it is preferable to use an oxygen permeable membrane composed of polytetrafluoroethylene or a tetrafluoroetylene-hexafluoropropylene copolymer as the oxygen permeable membrane 3.

A cathode current collector holding section 13 is disposed below the cathode current collector 5, and an electrolyte solution tank 7A including an electrolyte solution 7 and an anode 8 therein is disposed below the cathode current collector holding section 13. In the sensor 1 according to the present embodiment, the electrolyte solution 7 is supplied from a perforation for supplying an electrolyte solution 11. Further, a cathode lead wire 6 is electrically connected to the cathode 4, and drawn through a perforation for a cathode lead 12, which is provided in the cathode current collector holding section 13, then from the bottom of the holder body 9 to the outside.

An anode lead wire14 is electrically connected to the anode 8, and drawn from the bottom of the holder body 9 to the outside.

In the case of using the sensor 1 according to the present embodiment as a galvanic cell type oxygen sensor, a thermistor or resistor (not shown) is connected between the cathode lead wire 6 and the anode lead wire 14 to convert a current to a voltage signal, thereby obtaining a sensor output voltage. In the case of using the sensor 1 according to the present embodiment as a potentiostatic type oxygen sensor, a voltage is applied to convert the current at the voltage to a voltage signal, thereby obtaining a sensor output voltage.

In the present embodiment, the cathode 4 functions as a so-called catalytic electrode. As a material for the cathode 4, a metal which is effective for electrochemical reduction of oxygen, for example, gold (Au), silver (Ag), or platinum (Pt) is used.

As a material for the anode 8 in the present embodiment, a metal is used with which a stable oxidation reaction proceeds even when the oxygen in a gas to be measured has any concentration. As the metal for the material of the anode 8, for example, zinc (Zn), tin (Sn), lead (Pb), or the like is used.

Now then, the electrolyte solution 7 containing a chelating agent (described below in detail) is used in the electrochemical sensor1 according to the present embodiment. Thus, depending on the concentration of the chelating agent in the electrolyte solution 7 or the type of the metal contained in the anode 8, there is concern that the electrolyte solution 7 will react directly with the metal of the anode 8 to dissolve the anode 8 while generating hydrogen. When the reaction of the electrolyte solution 7 with the anode 8 generates hydrogen, the structure of the hermetically sealed sensor 1 is broken, thereby resulting in a liquid leakage problem.

Furthermore, in recent years, the directive on the use regulation of specified hazardous substances [the so-called RoHS Directive (Restriction of the Use of Certain Hazardous Substances in Electrical and Electronic Equipment)] has been issued in the EU (European Union) on the ground that there is a possibility that specified hazardous substances, including cadmium (Cd), mercury (Hg), and lead (Pb), will adversely affect the health and the environment. Therefore, electrochemical oxygen sensors have been demanded which are low in environmental load without the use of lead or the like.

Accordingly, the material for the anode 8 is preferably tin in that no hydrogen generation due to local corrosion is caused in the electrolyte solution 7 containing the chelating agent, resulting in low environmental loads.

Now then, an electrolyte solution containing a chelating agent is used as the electrolyte solution 7 in the present embodiment. While an aqueous electrolyte solution with an aqueous solvent and an organic electrolyte solution with an organic solvent can be used as the electrolyte solution 7, the aqueous electrolyte solution can be preferably used because surrounding moisture can be permitted to be mixed therein.

As the chelating agent contained in the electrolyte solution 7, EDTA, NTA, HIDA, HEDTA, DTPA, TTHA, GLDA, DHEG, PDTA, and DPTA-OH, and salts thereof may be cited. In the present invention, these chelating agent may be used by themselves, or the combination of two or more of these chelating agents may be used.

The term EDTA used herein is an abbreviation of Etylene Diamine Tetraacetic Acid.

The term NTA used herein is an abbreviation of Nitrilo Triacetic Acid.

The term HIDA used herein is an abbreviation of Hydroxyethyl Imino Diacetic Acid.

The term HEDTA used herein is an abbreviation of Hydroxyethyl Ethylene Diamine Triacetic Acid.

The term DTPA used herein is an abbreviation of Diethylene Triamine Pentaacetic Acid.

The term TTHA used herein is an abbreviation of Triethylene Tetramine Hexaacetic Acid.

The term GLDA used herein is an abbreviation of Dicarboxymethyl Glutamic Acid.

The term DHEG used herein is an abbreviation of Dihydoxyethyl Glycine.

The term PDTA used herein is an abbreviation of 1,3-Propanediamine Tetraacetic Acid.

The term DPTA-OH used herein is an abbreviation of 1,3-Diamino-2-hydroxypropane Tetraacetic Acid.

The concentration of the chelating agent in the electrolyte solution 7, even when the electrolyte solution 7 has a minute amount of chelating agent therein, leads to an increased response speed, as compared with conventional electrochemical oxygen sensors using no chelating agents.

It is beyond expectations of one skilled in the art to show the advantageous effect as described above merely through the use of the electrolyte solution 7 containing a minute amount of chelating agent. This is because one skilled in the art could not have conceived of increasing the response speed of the sensor 1 through the addition of a chelating agent, since the electrolyte solution 7 containing the chelating agent has a lower electric conductivity when the electric conductivity of the electrolyte solution 7 containing the chelating agent is compared with the electric conductivity of an electrolyte solution containing no chelating agent (see Table 1).

While the reason that the use of the electrolyte solution 7 containing the chelating agent can increase the response speed of the sensor 1 is unspecified, the reason is presumed as follows.

As a cause of lowering the response speed of a conventional oxygen sensor, the adhesion of a reaction inhibition production to the anode surface is considered, such as the creation of a passive state at the anode surface. In the present invention, it is believed that the chelating agent present in the electrolyte solution diffuses or partially dissolves the reaction inhibition production in the electrolyte solution, or catches an intermediate (for example, a metal ion which is used as the material of the anode 8) originating the reaction inhibition production to prevent the generation of the reaction inhibition production itself, thereby increasing the response speed of the oxygen sensor.

As described above, the response speed of the sensor 1 can be increased as long as the electrolyte solution 7 contains the chelating agent even in minute amounts. However, when the concentration of the chelating agent in the electrolyte solution 7 is too low, the response speed characteristics of the sensor 1 may be lowered in a few days. Thus, the concentration of the chelating agent in the electrolyte solution 7 is preferably not less than 0.005 mol/liter, because response speed characteristics are less likely to lower.

When strict requirements should be met as in the case of applying the sensor 1 to a medical device, the concentration of the chelating agent in the electrolyte solution 7 is preferably not less than 0.1 mol/liter, and particularly preferably not less than 1.0 mol/liter.

On the other hand, the higher concentration the chelating agent in the electrolyte solution 7 has, the longer period of time the increased response speed can be maintained for. Further, in order to achieve this advantageous effect, the chelating agent may be saturated.

The pH of the electrolyte solution 7 may be not less than 9, preferably not less than 10, and particularly preferably not less than 12. In order to bring the electrolyte solution 7 into pH not less than 12, an alkaline metallic base or an alkaline earth metallic base, such as potassium hydroxide, sodium hydroxide, or calcium hydroxide, or a mixture thereof may be added to the solution containing the chelating agent. The pH of the electrolyte solution not less than 12 prominently produces the advantageous effect that the increased response speed can be maintained for a long period of time.

### <Example>

The present invention will be further described below with reference to an example.

### (1)Manufacture of Electrochemical Oxygen Sensors of Test Samples 1 to 21

Materials listed below were used to manufacture electrochemical oxygen sensors (hereinafter, also referred to as "sensors") in the same fashion as in the first embodiment. Specifically, sensors of test numbers 1 to 13 and sensors of test numbers 15 to 21 were manufactured as galvanic cell type oxygen sensors, whereas a sensor of test number 14 was manufactured as potentiostatic type oxygen sensors because the sensor of test number 14 did not operate as a sensor when the sensor was manufactured a galvanic cell type oxygen sensor.

Gold (Au) was used as the cathode material for each sensor. As a material for the anode, as shown in Table 1, tin (Sn), zinc (Zn), and lead (Pb) were used respectively for the sensors of test numbers 1 to 13 and test numbers 17 to 21, the sensors of test numbers 14 to 15, and for the sensor of test number 16. A polytetrafluoroethylene was used for the oxygen permeable membrane, and a ethylene-propylene rubber was used as the O-ring.

For the sensors of test numbers 1 to 10, 15, and 16, a tetrasodium salt of EDTA (from NACALAI TESQUE, INC.) was weighed to reach the concentrations listed in Table 1, and dissolved in ion-exchange water for use as an electrolyte solution. It is to be noted that the chemical formula of the tetrasodium salt of EDTA is (NaOOCH₂C)₂NCH₂CH₂N(CH₂COONa)₂.

For the sensor of test number 11, a chelating agent containing aqueous solution containing a tetrasodium salt of EDTA at a concentration of 1.2 mol/liter was prepared, and sodium hydroxide (from NACALAI TESQUE, INC.) was added to the chelating agent containing aqueous solution to adjust the pH to 13 for use as an electrolyte solution. It is to be noted that a glass electrode type hydrogen ion concentration meter D-14, from HORIBA, Ltd., was used for the pH adjustment of the electrolyte solution.

For the sensor of test number 12, an electrolyte solution was used, which had been prepared in the same way as for test number 11, except that sodium hydroxide was added to bring the pH into 12.

For the sensor of test number 13, an electrolyte solution was used, which had been prepared in the same way as for test number 11, except that sodium hydroxide was added to bring the pH into 14.

For the sensor of test number 14, an electrolyte solution was used, which had been prepared by adding 7.46 g of potassium chloride (from NACALAI TESQUE, INC.) to 100 ml of a 0.001 mol/liter potassium hydroxide aqueous solution and dissolving the potassium chloride. For the preparation of the potassium hydroxide aqueous solution, potassium hydroxide and ion-exchange water from NACALAI TESQUE, INC. were used.

For the sensors of test numbers 17 to 21, HEDTA (from Chelest Corporation) was weighed to reach the concentrations listed in Table 1, and dissolved in ion-exchange water for use as an electrolyte solution.

Table 1 shows the type and concentration (mol/liter) of the chelating agent in the electrolyte solution used for each sensor. Since no chelating agent was used for test number 14, the columns for the type and concentration of he chelating agent are filled with the symbol "-".

The pH for the electrolyte solutions used in the sensors of test numbers 5 to 10, 14 was measured with the glass electrode type hydrogen ion concentration meter D-14, from HORIBA, Ltd., and the measured values are shown in Table 1.

The electric conductivity for electrolyte solutions used in the sensors of test numbers 1, 5, 10, 14, 17, 20, 21 was measured with the use of an electric conductivity measuring apparatus (from Iuchi Scale Co., Ltd., Trade Name: cyberscan 100), and the measured values are shown in Table 1.

### (2) Evaluation Test

Prior to the evaluation test, it was visually confirmed that no gas was generated from the anode surfaces of the sensors of test numbers 1 to 21. For the sensors of test numbers 1 to 21, a test was carried out for evaluating the "90% response speed" just after the manufacture, after one month, after two months, after five months, and after seven months.

For the 90% response speed, the time period was measured which was required until the output was changed by 90% in the case of stabilizing the output for each sensor in the air (oxygen concentration: 21%), then passing a 100% concentration of oxygen through the sensor with the output stabilized, and setting as 100% the output (saturation output) which can be produced by passing therethrough the 100% concentration of oxygen.

In the evaluation test, the output 30 minutes after the beginning of passing the oxygen was regarded as the saturation output.

The results obtained from the evaluation test described above are shown in Table 1. In Table 1, the symbol o means that the 90% response speed is less than 15 seconds, the symbol Δ means that the response speed is not less than 15 seconds but less than 60 seconds, and the symbol × means that the response speed is not less than 60 seconds.

**[Table 1]**

| Test Number | Positive Electrode | Negative Electrode | Electrolyte Solution | | | | Response Speed Test | | | | |
|---|---|---|---|---|---|---|---|---|---|---|---|
| | | | Chelating Agent | | pH of Electrolyte Solution | Electric Conductivity mS/cm | Just After Manufacture | One Month | Two Months | Five Months | Seven Months |
| | | | Type | Concentration (mol/L) | | | | | | | |
| 1 | Au | Sn | EDTA | 0.001 | | 10.0 | ○ | Δ | Δ | × | × |
| 2 | Au | Sn | EDTA | 0.005 | | - | ○ | Δ | Δ | Δ | Δ |
| 3 | Au | Sn | EDTA | 0.01 | | - | ○ | Δ | Δ | Δ | Δ |
| 4 | Au | Sn | EDTA | 0.05 | | - | ○ | Δ | Δ | Δ | Δ |
| 5 | Au | Sn | EDTA | 0.1 | 11.26 | 18.1 | ○ | ○ | ○ | Δ | Δ |
| 6 | Au | Sn | EDTA | 0.3 | 11.11 | - | ○ | ○ | ○ | Δ | Δ |
| 7 | Au | Sn | EDTA | 0.5 | 11.08 | - | ○ | ○ | ○ | Δ | Δ |
| 8 | Au | Sn | EDTA | 0.7 | 10.99 | - | ○ | ○ | ○ | Δ | Δ |
| 9 | Au | Sn | EDTA | 1.0 | 10.83 | - | ○ | ○ | ○ | ○ | Δ |
| 10 | Au | Sn | EDTA | 1.2 | 10.61 | 50.0 | ○ | ○ | ○ | ○ | Δ |
| 11 | Au | Sn | EDTA | 1.2 | 13.00 | - | ○ | ○ | ○ | ○ | ○ |
| 12 | Au | Sn | EDTA | 1.2 | 12.00 | - | ○ | ○ | ○ | ○ | ○ |
| 13 | Au | Sn | EDTA | 1.2 | 14.00 | - | ○ | ○ | ○ | ○ | ○ |
| 14 | Au | Zn | - | - | 10.87 | 115 | Δ | Δ | Δ | Δ | Δ |
| 15 | Au | Zn | EDTA | 0.3 | | - | ○ | - | | | |
| 16 | Au | Pb | EDTA | 1.0 | | - | ○ | ○ | ○ | O | Δ |
| 17 | Au | Sn | HEDTA | 0.001 | | 8.0 | ○ | × | × | × | × |
| 18 | Au | Sn | HEDTA | 0.005 | | - | ○ | ○ | Δ | Δ | Δ |
| 19 | Au | Sn | HEDTA | 0.01 | | - | ○ | ○ | Δ | Δ | Δ |
| 20 | Au | Sn | HEDTA | 0.1 | | 12.2 | ○ | ○ | ○ | Δ | Δ |
| 21 | Au | Sn | HEDTA | 1.0 | | 40.0 | ○ | ○ | ○ | ○ | ○ |

As shown in Table 1, the response speeds for the sensors of test numbers 1 to 13 and the sensors of test numbers 15 to 21 according to the present invention are superior just after the manufacture, as compared with the response speed provided by the sensor of test number 14. From this result, it is determined that the chelating agent contained in the electrolyte solution can increase the response speeds of the sensors.

It is to be noted that the 90% response speed less than 15 seconds is equivalent to he 90% response speed of an electrochemical oxygen sensor with lead used for an anode (which demonstrates superior performance although its environmental load is high), the sensors according to the present invention can be thus said to produce sufficient performance for practical use.

In addition, it is determined that the sensors with the concentration of the chelating agent not less than 0.005 mol/liter (test numbers 2 to 13, test numbers 16, 18 to 21) are preferable because the response speed characteristics are less likely to lower. Furthermore, it is determined that the higher concentration of the chelating agent maintains the increased response speeds for a long period of time.

Moreover, while the electrolyte solution (1.2 mol/L EDTA aqueous solution) used for the sensor of test number 10 has pH 10.61, it is determined that the increased response speed can be maintained for a longer period of time when the electrolyte solution was used which was obtained by adjusting pH to 13 through the addition of sodium hydroxide (test number 11). Further, the same result as for the sensor of test number 11 was also be obtained in the case of the pH 12 (test number 12) and in the case of the pH 14 (test number 13).

On the other hand, while the sensor of test number 15 provided a high response speed just after the manufacture, liquid leakage occurred after a lapse of several days after the manufacture. As described above, the electrochemical oxygen sensor should have a hermetically sealed structure. However, the liquid leakage occurred because the internal pressure of the sensor of test number 15 was increased due to the generation of such an amount of gas that was not able to be visually confirmed in the sensor, thereby breaking the hermetically sealed structure. Therefore, it was not possible to measure the response speed in the stages other than just after the manufacture (after one month, after two months, after five months, and after seven months), and the columns for the stages are thus filled with the symbol "-" in Table 1. From this result, the anode is preferably a material other than zinc in the sensor using an EDTA solution for the electrolyte solution. The sensors with tin as their anodes (test numbers 1 to 13, test numbers 17 to 21) can be said to be preferable because such liquid linkage is not caused resulting in low environmental loads.

The electric conductivity for the electrolyte solutions is increased with increase in the concentration of the chelating agent. However, the electrolyte solution with the chelating agent added has a lower electric conductivity than the electrolyte solution with no chelating agent added when the electrolyte solution with the chelating agent added is compared with the electrolyte solution with no chelating agent added.

## Claims

1. An electrochemical oxygen sensor (1) comprising a cathode (4), an anode (8), and an electrolyte solution (7), said electrolyte solution (7) containing a chelating agent
**characterised in that** a material of said anode (8) is tin,
and the pH of the electrolyte solution (7)is in a range of 12 to 14.

2. The electrochemical oxygen sensor (1) according to claim 1, wherein the chelating agent in said electrolyte solution (7) has a concentration of not less than 0.005 mol/liter.

3. The electrochemical oxygen sensor (1) according to any one of claims 1 or 2, comprising an oxygen permeable membrane (3) composed of a polytetrafluoroethylene or tetrafluoroethylene-hexafluoropropylene copolymer.

4. The electrochemical oxygen sensor (1) according to any one of claims 1 to 3, wherein the electrochemical oxygen sensor (1) is a galvanic cell type sensor in which a thermistor or a resistor is connected between said cathode and said anode to convert a current to a voltage signal, thereby obtaining a sensor output voltage.

## Patentansprüche

1. Elektrochemischer Sauerstoffsensor (1), umfassend eine Kathode (4), eine Anode (8) und eine Elektrolytlösung (7), wobei die Elektrolytlösung (7) ein Chelatisierungsmittel enthält, **dadurch gekennzeichnet, daß** ein Material der Anode (8) Zinn ist, und der pH der Elektrolytlösung (7) in einem Bereich von 12 bis 14 ist.

2. Elektrochemischer Sauerstoffsensor (1) gemäß Anspruch 1, wobei das Chelatisierungsmittel in der Elektrolytlösung (7) eine Konzentration von nicht weniger als 0,005 Mol/Liter aufweist.

3. Elektrochemischer Sauerstoffsensor (1) gemäß einem der Ansprüche 1 oder 2, umfassend eine Sauerstoff-durchlässige Membran (3), aufgebaut aus einem Polytetrafluorethylen oder Tetrafluorethylen-Hexafluorpropylen-Copolymer.

4. Elektrochemischer Sauerstoffsensor (1) gemäß einem der Ansprüche 1 bis 3, wobei der elektrochemische Sauerstoffsensor (1) ein Sensor vom Galvanik-Zelle-Typ ist, worin ein Thermistor oder ein Resistor zwischen der Kathode und der Anode verbunden ist, um einen Strom in ein Spannungssignal umzuwandeln, wodurch eine Sensoroutputspannung erhalten wird.

## Revendications

1. Détecteur électrochimique d'oxygène (1) comprenant une cathode (4), une anode (8) et une solution électrolytique (7), ladite solution électrolytique (7) contenant un agent de chélation,
**caractérisé en ce qu'**un matériau de ladite anode (8) est de l'étain et le pH de la solution électrolytique (7) est compris dans la plage allant de 12 à 14.

2. Détecteur électrochimique d'oxygène (1) selon la revendication 1, dans lequel l'agent de chélation de ladite solution électrolytique (7) présente une concentration de pas moins de 0,005 mole/litre.

3. Détecteur électrochimique d'oxygène (1) selon l'une quelconque des revendications 1 ou 2, comprenant une membrane perméable à l'oxygène (3) composée de polytétrafluoroéthylène ou d'un copolymère tétrafluoro-éthylène-hexafluoropropylène.

4. Détecteur électrochimique d'oxygène (1) selon l'une quelconque des revendications 1 à 3, dans lequel le détecteur électrochimique d'oxygène (1) est un détecteur de type à cellule galvanique dans lequel un thermistor ou une résistance est connecté/e entre ladite cathode et ladite anode pour convertir un courant en un signal de tension, et ainsi obtenir une tension de sortie de détecteur.
